(19) Europäisches Patentamt
European Patent Office
Office européen des brevets

(11) **EP 3 826 151 A1**

(12) **EUROPEAN PATENT APPLICATION**
published in accordance with Art. 153(4) EPC

(43) Date of publication:
**26.05.2021 Bulletin 2021/21**

(51) Int Cl.:
**H02K 7/116** (2006.01)    **F16H 1/32** (2006.01)

(21) Application number: **19838871.2**

(22) Date of filing: **12.07.2019**

(86) International application number:
**PCT/CN2019/095837**

(87) International publication number:
**WO 2020/015590 (23.01.2020 Gazette 2020/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **18.07.2018 CN 201810791883**

(71) Applicant: **Six Ring Drive (Xi An) Technology Co., Ltd.**
**Shaanxi 712000 (CN)**

(72) Inventors:
• **WANG, Junling**
xian New Area Xi'an, Shaanxi 712000 (CN)
• **WANG, Chuanbin**
xian New Area Xi'an, Shaanxi 712000 (CN)
• **WANG, Wei**
xian New Area Xi'an, Shaanxi 712000 (CN)

(74) Representative: **Cabinet Beau de Loménie**
**158, rue de l'Université**
**75340 Paris Cedex 07 (FR)**

(54) **PLANETARY REDUCTION ELECTRICAL MACHINE CAPABLE OF ACHIEVING FULL CLOSED-LOOP CONTROL AND ARTICULATED ROBOT**

(57)    The present invention relates to a planetary speed reduction motor capable of achieving full-closed-loop control and an articulated robot using the same. The planetary speed reduction motor is high in assembly precision and achieves high-precision full-closed-loop control. The planetary speed reduction motor mainly comprises a planetary speed reducer portion and a motor portion, and further comprises a full-closed-loop control device. The full-closed-loop control device comprises a drive shaft and a grating encoder. The grating encoder is positioned outside a motor housing and is mounted on the tail end face of the motor housing. A rotor and a sun gear of the first stage of planetary speed reduction mechanism in the planetary speed reducer are fixedly connected by interference fit. The front end of the motor housing and a speed reducer shell are directly fixed by screws. Moreover, in each stage of planetary speed reduction mechanism, at least two planetary holes in the planetary carrier have a circumferential offset relative to the position of planetary gears in the circumferential direction in order to reduce reverse gap.

Fig. 1

**Description**

**TECHNICAL FIELD**

The present invention relates to the technical field of gear drive mechanisms, and particularly relates to a planetary speed reduction motor capable of achieving full-closed-loop control and an articulated robot.

**BACKGROUND**

In planetary gear drive solutions, due to presence of processing errors and assembly errors, there exist backlash between a sun gear and a planetary gear and between a planetary gear and an internal gear, and a bearing clearance between a planetary gear and a planetary gear shaft. The backlash and the bearing clearance result in reverse gap.
At the same time, there is a large assembly error in a structure for connecting a speed reducer and a drive motor.
The existing planetary speed reduction motor generally adopts semi-closed-loop control, and can only detect the rotation position of a motor shaft of a drive motor at the input end. Thus, transmission precision, torsion deformation, and reverse gap and the like of the speed reducer cannot be effectively detected and compensated for.
Therefore, in some occasions requiring high control precision, the use of the semi-closed-loop control to control the planetary speed reduction motor cannot meet requirements of normal use.

**SUMMARY**

In order to overcome the problems in the prior art, the present invention provides a planetary speed reduction motor capable of achieving full-closed-loop control, which connects a motor portion with a speed reducer portion by interference fit. Meanwhile, the preset invention sets forth the design of an offset of planetary holes in a planetary carrier and adopts full-closed-loop control, which improves not only assembly precision of the planetary speed reduction motor but also the control precision of the planetary speed reduction motor.
Besides, the present invention further provides an articulated robot using the planetary speed reduction motor.
The specific technical solution of the present invention is as follows:

the present invention provides a planetary speed reduction motor capable of achieving full-closed-loop control, comprising a planetary speed reducer portion comprising an internal gear housing, S stages of planetary speed reduction mechanisms arranged in the internal gear housing, and a rotary base sleeving the exterior of the internal gear housing, wherein S≥1; and a motor portion comprising a motor housing, and a stator and a rotor arranged in the motor housing,

and further comprises: a full-closed-loop control device comprising a drive shaft, and a grating encoder positioned outside the motor housing and mounted on a tail end face of the motor housing, wherein,
one end of the drive shaft is fixedly connected with output ends of the S stages of planetary speed reduction mechanisms, and the other end of the drive shaft passes through each stage of sun gear in the S stages of planetary speed reduction mechanisms, the rotor and the motor housing in sequence and then is connected with a rotary portion of the grating encoder;
the rotor and a sun gear of the first stage of planetary speed reduction mechanism in the planetary speed reducer are fixedly connected by interference fit, and the front end of the motor housing and a speed reducer shell are directly fixed by screws; and
in each stage of planetary speed reduction mechanism, at least two planetary holes in a planetary carrier have a circumferential offset relative to the position of planetary gears distributed in the circumferential direction, and due to the presence of the offset, a certain internal force will be generated in order to reduce or eliminate reverse gap.

Further, the preferred arrangement mode is that the planetary gears in a planetary gear set are uniformly distributed in the circumferential direction, and at least two planetary holes in the planetary carrier have a circumferential offset relative to the position of the planetary gears uniformly distributed in the circumferential direction.
Further, when the offset has various numbers of planetary holes in the planetary carrier, there are the following conditions of combinations of included angles of adjacent planetary gears in the circumferential direction:

suppose that the number of the planetary holes is N, wherein N≥2, and an offset per unit is defined as $\Delta\varphi$,
when N is an even number, a combination of an included angle between two adjacent planetary holes in the circumferential direction is $N/2 \{(360/N)+\Delta\varphi, (360/N)-\Delta\varphi\}$;
when N is an odd number, and N=2M+1 and M≥1, there are four conditions of combinations of included angles between two adjacent planetary holes in one planetary carrier in the circumferential direction:

A: M+1 (360/N)+Δφ, M-1 (360/N)-Δφ, 1 (360/N)-2Δφ;

B: M+1 (360/N)-Δφ, M-1 (360/N)+Δφ, 1 (360/N)+2Δφ;

C: M (360/N)+Δφ, M+1 (360/N)-(M/M+1)Δφ; and

D: M (360/N) -Δφ, M+1 (360/N) + (M/M+1)Δφ.

Further, the Δφ consists of a circumferential angular displacement caused by backlash, a circumferential angular displacement caused by a bearing clearance, and a circumferential angular displacement caused by pre-tightening force between contact tooth flanks;

the specific calculation formula of the Δφ is: $\Delta\varphi = \Delta\varphi_1 + \Delta\varphi_2 + \Delta\varphi_3$, wherein:

$\Delta\varphi_1$ is a circumferential angular displacement caused by backlash;

$\Delta\varphi_2$ is a circumferential angular displacement caused by a bearing clearance; and

$\Delta\varphi_3$ is a circumferential angular displacement caused by pre-tightening force between contact tooth flanks.

Further, the specific calculation formula of the $\Delta\varphi_1$ is as follows:

$$\Delta\varphi_1 = \frac{1}{2r_{distribution}}((W_{st}-W_{sr})/\cos\alpha_s + 2*(W_{pt}-W_{pr})/\cos\alpha_p + (W_{it}-W_{ir})/\cos\alpha_i)$$

In the formula, $r_{distribution}$ is a radius of a distribution circle of the planetary holes, $W_{st}$ is a non-backlash theoretical common normal of the sun gear, $W_{sr}$ is a measured common normal of the sun gear, and $\alpha_s$ is a pressure angle of a reference circle of the sun gear; $W_{pt}$ is a non-backlash theoretical common normal of the planetary gears, $W_{pr}$ is a measured common normal of the planetary gears, and $\alpha_p$ is a pressure angle of a reference circle of the planetary gears; and $W_{it}$ is a non-backlash theoretical common normal of an internal gear of the internal gear housing, $W_{ir}$ is a measured common normal of the internal gear of the internal gear housing, and $\alpha_i$ is a pressure angle of a reference circle of the internal gear of the internal gear housing.

Further, the specific calculation formula of the $\Delta\varphi_2$ is as follows:

$$\Delta\varphi_2 = \frac{e_{clearance}}{r_{distribution}},$$

wherein $e_{clearance}$ is a bearing clearance, and the bearing is arranged between the planetary gear and the planetary gear shaft.

Further, the specific calculation formula of the $\Delta\varphi_3$ is: $\Delta\varphi_3 = T*\dfrac{\eta}{kr_{distribution}},$ in the formula, T is a rated torque, $\eta$ is a coefficient value taken according to possible wear conditions and manufacturing errors from a range of 0.1-0.2, and k is stiffness of a planetary speed reduction mechanism.

Further, in order to reduce an axial dimension of the planetary speed reduction motor while effectively improving bending stiffness, the sun gear in the first stage of planetary speed reduction mechanism of the S stages of planetary speed reduction mechanisms is used as an input end, and the planetary carrier in the S-th stage of planetary speed reduction mechanism is used as an output end;

a first layer of bearing raceway is formed between an outer ring surface of the planetary carrier in the S-th stage of planetary speed reduction mechanism and an inner ring surface of the internal gear housing;

a second layer of bearing raceway is formed between an outer ring surface of the internal gear housing and an inner ring surface of the rotary base;

a plurality of steel balls are uniformly clamped in the first layer of bearing raceway in the circumferential direction, and a plurality of steel balls are uniformly clamped in the second layer of bearing raceway in the circumferential direction.

Further, during use, the planetary carrier of the S-th stage of planetary speed reduction mechanism and the rotary base are both connected with the next stage of structure. Rotation is required, but the internal gear housing is fixed. Thus the shapes of the first layer of bearing raceway and the second layer of bearing raceway are both the same as the shape of a bearing raceway of an angular contact ball bearing, thereby avoiding axial endplay between the planetary carrier of the S-th stage of planetary speed reduction mechanism and the internal gear housing and between the internal gear housing and the rotary base.

Further, in order to reduce an axial dimension of the planetary speed reducer and ensure reliability of axial positioning among all stages of planetary speed reduction mechanisms, the following design is adopted in each stage of planetary speed reduction structure: a tooth portion of the sun gear is divided into a high tooth portion and a low tooth portion along the axis thereof, and the high tooth portion and the low tooth portion form a stepped tooth.

The high tooth portion and each planetary gear of a planetary gear set in the same stage of planetary speed reduction mechanism are engaged with each other, the low tooth portion and a planetary carrier in a previous stage of planetary speed reduction mechanism are engaged, and the stepped tooth axially positions the previous stage of planetary speed reduction mechanism.

In addition, the present invention further provides an articulated robot comprising at least two articulated limbs, and the planetary speed reduction motor as described above is arranged between two articulated limbs.

The beneficial effects of the present invention are as follows:

1. According to the present invention, the sun gear and the rotor of the motor are fixedly connected directly by interference fit to eliminate assembly errors in the planetary speed reduction mechanism, reverse gap is eliminated by the design of the offset of planetary holes in the planetary carrier, and meanwhile, rotation motion output by the speed reducer is transferred to the grating encoder via one drive shaft, thereby achieving the full-closed loop control of the planetary speed reduction motor and greatly improving precision of the planetary speed reduction motor.

2. According to the present invention, the rotor in the motor and the sun gear of the first stage of planetary speed reduction mechanism in the planetary speed reducer are in interference fit, and the motor housing and the speed reducer shell are directly connected using screws, which not only further avoids drive errors resulting from assembly gaps occurring when adopting key connection, or spline connection, or other connection modes but also reduces the volume of the device.

3. According to the present invention, the first layer of bearing raceway is formed between the outer ring surface of the planetary carrier in the S-th stage of planetary speed reduction mechanism and the inner ring surface of the internal gear housing, the second layer of bearing raceway is formed between the outer ring surface of the internal gear housing and the inner ring surface of the rotary base, and the first layer of bearing raceway and the second layer of bearing raceway are each uniformly clamped with a plurality of steel balls in the circumferential direction. So that the axial dimension of the planetary speed reduction motor is greatly reduced, and besides, the special design of the two-layered bearing raceway and the steel balls increases the radial dimension and effectively improves the bending stiffness of the planetary speed reduction motor.

4. During use of the present invention, the planetary carrier of the S-th stage of planetary speed reduction mechanism and the rotary base are both connected with the next stage of structure. Rotation is required, but the internal gear housing is fixed. Thus the shapes of the first layer of bearing raceway and the second layer of bearing raceway are both the same as the shape of a bearing raceway of an angular contact ball bearing, which avoids axial endplay between the planetary carrier of the S-th stage of planetary speed reduction mechanism and the internal gear housing and between the internal gear housing and the rotary base.

5. In the present invention, each stage of sun gear is provided with a stepped tooth consisting of a high tooth portion and a low tooth portion, which not only reduces the axial dimension of the planetary speed reducer but also ensures the reliability of axial positioning among all stages of planetary speed reduction mechanisms.

## BRIEF DESCRIPTION OF THE DRAWINGS

Fig. 1 is a structural schematic diagram of the present invention;
Fig. 2 is a structural schematic diagram of a planetary speed reduction mechanism of the present invention; and
Fig. 3 is a partially enlarged schematic diagram of position A in Fig. 2.

Reference Signs:

1. stator; 2. rotor; 3. high-speed sun gear; 4. high-speed planetary gear set; 5. high-speed pin shaft; 6. high-speed planetary carrier; 7. middle-speed sun gear; 8. middle-speed planetary gear set; 9. middle-speed pin shaft; 10. middle-speed planetary carrier; 11. low-speed sun gear; 12. low-speed planetary gear set; 13. low-speed pin shaft; 14. low-speed planetary carrier; 15. internal gear housing; 16. motor housing; 17. high tooth portion; 18. low tooth portion; 19. drive shaft; 20. grating encoder; 21. first layer of bearing raceway; 22. second layer of bearing raceway; 23. steel ball; 2.1. planetary gear (A); 2.2. planetary gear (B); 2.3. planetary gear (C); 2.4. planetary gear (D).

## DETAILED DESCRIPTION

The present invention will be depicted in detail in conjunction with the following embodiments:
in a planetary speed reduction motor in the embodiments, reverse gap of a planetary speed reducer is eliminated, and a full-closed-loop control device capable of improving the precision of the planetary speed reduction motor is designed. Besides, the planetary speed reduction motor is also shortened in the axial dimension compared with the existing planetary speed reduction motor.

When the planetary speed reduction motor having high precision is applied to an articulated robot, requirements of using the articulated robot can be satisfied.

**Basic Structure of Planetary Speed Reduction Motor in Embodiments**

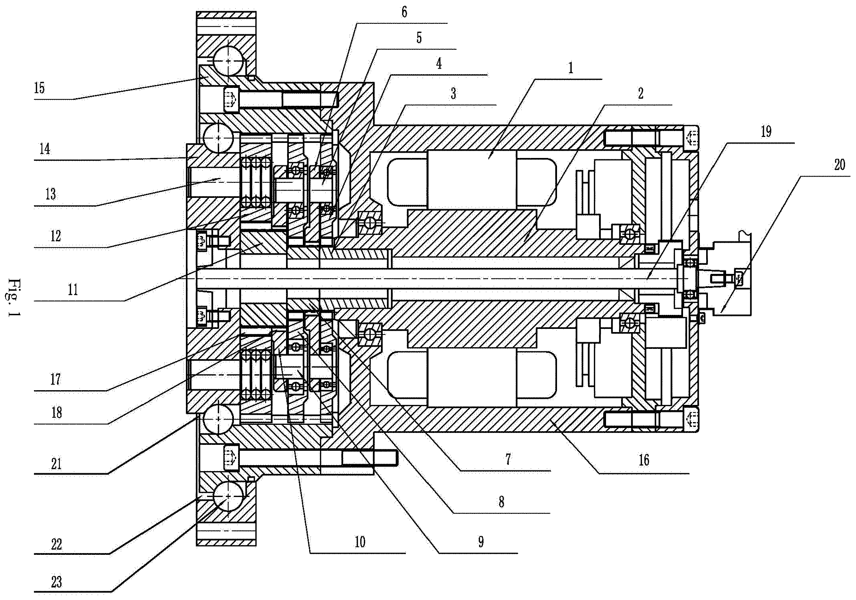

As shown in Fig. 1, a contact mechanism of the planetary speed reduction motor comprises a planetary speed reducer portion and a motor portion, the motor portion comprises a motor housing 16 and a stator 1 and a rotor 2 arranged in the motor housing 16. The planetary speed reducer portion comprises an internal gear housing 15 and S stages of planetary speed reduction mechanisms arranged in the internal gear housing 15. In this embodiment, S=3;

wherein, a high-speed sun gear 3, a high-speed planetary gear set 4, a high-speed pin shaft 5 and a high-speed planetary carrier 6 form the first stage of planetary speed reduction mechanism;

a middle-speed sun gear 7, a middle-speed planetary gear set 8, a middle-speed pin shaft 9 and a middle-speed planetary carrier 10 form the second stage of planetary speed reduction mechanism;

a low-speed sun gear 11, a low-speed planetary gear set 12, a low-speed pin shaft 13 and a low-speed planetary carrier 14 form the third stage of planetary speed reduction mechanism;

the high-speed sun gear 3, planetary gears in the high-speed planetary gear set 4, the middle-speed sun gear 7, planetary gears in the middle-speed planetary gear set 8, the low-speed sun gear 11, and planetary gears in the low-speed planetary gear set 12 are all cylindrical involute spur gears (external gears).

The interior of the internal gear housing 15 is further provided with internal gears, and the internal gears are cylindrical involute spur gears.

The high-speed planetary carrier 6, the middle-speed planetary carrier 10 and the low-speed planetary carrier 14 are of revolving structures, and are each provided with at least two planetary holes (four in the present invention) at a certain radius in the circumferential direction, and the number of the planetary holes is equal to the number of planetary gears in the same stage.

**Optimised Design of Planetary Speed Reduction Motor in Embodiments**

**Full-Closed-Loop Control Device and Reverse Gap**

The full-closed-loop control device comprises a drive shaft 19 and a grating encoder 20. The grating encoder 20 is positioned outside the motor housing 16 and mounted on the tail end face of the motor housing 16.

One end of the drive shaft 19 is fixedly connected with output ends of three stages of planetary speed reduction mechanisms (one end of the drive shaft is provided with a flange, and the drive shaft is fixed to a planetary carrier in the third stage of planetary speed reduction mechanism of the three stages of planetary speed reduction mechanisms via screws), and the other end of the drive shaft 19 passes through each stage of sun gear in the three stages of planetary speed reduction mechanisms, the rotor 2 and the motor housing 16 in sequence, and then is connected to a rotary portion of the grating encoder 20. The specific principle is that the drive shaft 19 transfers the output rotation angle to the grating encoder 20, and the grating encoder 20 transfers real-time positions of the output ends of the three stages of planetary speed reduction mechanisms to a control system of the motor to achieve full-closed-loop control.

At least two planetary holes in a planetary carrier of each stage of planetary speed reduction mechanism have a circumferential offset relative to the position of planetary gears distributed in the circumferential direction in order to reduce reverse gap.

The design method of no reverse gap is as follows:

Planetary gears in the planetary gear set can be uniformly or non-uniformly distributed in the circumferential direction, but it must be satisfied that each of the planetary gears is engaged with the internal gear housing and the sun gear.

This embodiment adopts the circumstance where the planetary gears are distributed uniformly.

A planetary gear set 2 is divided into Set I and Set II. Firstly, the planetary gear sets are assembled in a uniformly distributed pattern along the circumference, then the position of Set I remains unchanged, and a small circumferential offset is added to Set II along the circumference. This offset is provided by the planetary carrier. That is, when the planetary carrier is being processed, planetary holes corresponding to the planetary gears of Set I are uniformly distributed, and planetary holes corresponding to the planetary gears of Set II are tangentially added with a tiny circumferential offset along the circumference on the basis of uniform distribution.

When the offset has various numbers of planetary holes in the planetary carrier, included angles between adjacent planetary holes in the circumferential direction have the following combinations:

suppose that the number of the planetary holes is N, wherein N≥2, and an offset per unit is defined as Δφ;

when N is an even number, a combination of an included angle between two adjacent planetary holes in the circumferential direction is N/2 {(360/N)+Δφ, (360/N)-Δφ};

when N is an odd number, and N=2M+1 and M≥1, there are four conditions of combinations of included angles between two adjacent planetary holes in one planetary carrier in the circumferential direction:

A: M+1 (360/N)+Δφ, M-1 (360/N)-Δφ, 1 (360/N)-2Δφ;
B: M+1 (360/N)-Δφ, M-1 (360/N)+Δφ, 1 (360/N)+2Δφ;
C: M (360/N)+Δφ, M+1 (360/N)-(M/M+1)Δφ; and
D: M (360/N) -Δφ, M+1 (360/N)+(M/M+1)Δφ.

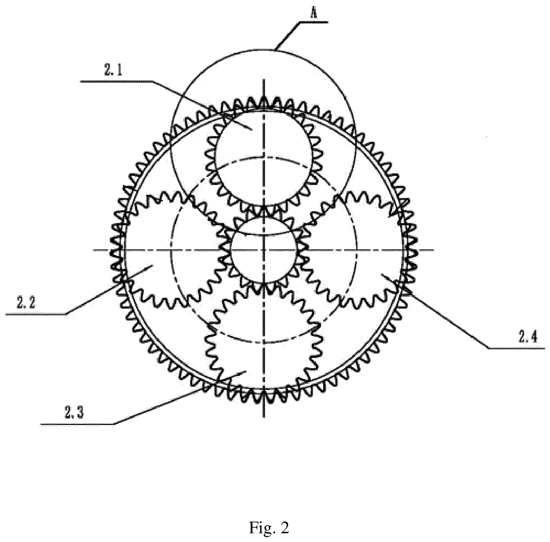

Take there being four planetary gears in each stage of planetary speed reduction mechanism in Fig. 2 for example, a planetary gear (A) 2.1 and a planetary gear (C) 2.3 form Set I, and are distributed at 0° and 180°.

A planetary gear (B) 2.2 and a planetary gear (D) 2.4 form Set II, and are distributed at (90+Δφ)° and (270+Δφ)°. Then included angles between the planetary gear (A) 2.1 and the planetary gear (B) 2.2, between the planetary gear (B) 2.2 and the planetary gear (C) 2.3, between the planetary gear (C) 2.3 and the planetary gear (D) 2.4 and between the planetary gear (D) 2.4 and the planetary gear (A) 2.1 in the circumferential direction are respectively (90+Δφ)°, (90-Δφ)°, (90+Δφ)° and (90-Δφ)°.

Table 1 provides combination forms of included angles between adjacent planetary holes (i.e., adjacent planetary gears) when the number of the planetary gears is 2-5.

**Table 1**

| Number of planetary gears | Condition 1 | Condition 2 | Condition 3 | Condition 4 |
|---|---|---|---|---|
| 2 | 1800+Δφ, 180°-Δφ | / | / | / |
| 3 | 120°+Δφ, 120°+Δφ, 120°-2Δφ | 120°-Δφ, 120°-Δφ, 120°+2Δφ | 120°+Δφ, 120°-0.5Δφ, 120°-0.5Δφ | 120°-Δφ, 120°+0.5Δφ, 120°+0.5Δφ |
| 4 | 90°+Δφ, 90°-Δφ, 90°+Δφ, 90°-Δφ | / | / | / |
| 5 | 72°+Δφ, 72°+Δφ, 72°+Δφ, 72°-Δφ, 72°-2Δφ, | 72°-Δφ, 72°-Δφ, 72°-Δφ, 72°+Δφ, 72°+2Δφ, | 72°+Δφ, 72°+Δφ, 72°-2/3Δφ, 72°-2/3Δφ, 72°-2/3Δφ, | 72°-Δφ, 72°-Δφ, 72°+2/3Δφ, 72°+2/3Δφ, 72°+2/3Δφ, |

The following will take the planetary gear (A) 2.1 and the planetary gear (D) 2.4 in the above embodiment of four planetary gears for example to analyse their stress and backlash elimination process.

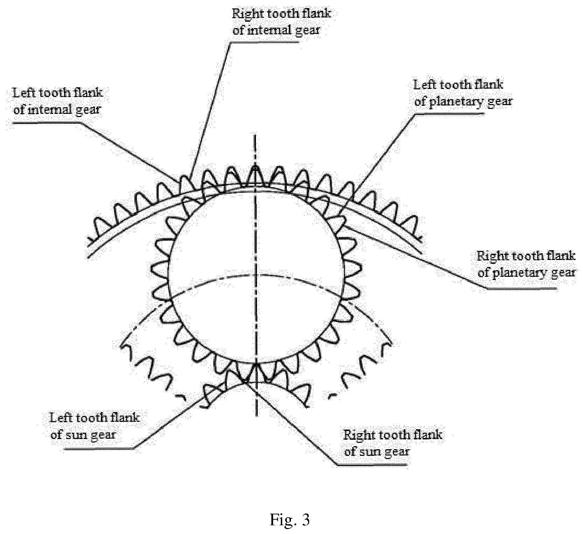

For the convenience of description, firstly the left tooth flank and the right tooth flank of a single gear tooth are defined according to Fig. 3.

A line is drawn in a clockwise direction, the surface intersected first is the left tooth flank and the surface intersected thereafter is the right tooth flank. Due to the problems on processing precision and ease of assembly, generally gears have backlash when being engaged. Before a planetary drive device in the figure adds a slight displacement to Set II, backlash exists between the planetary gear set and the sun gear, and between the planetary gear set and the internal gear of the internal gear housing both during engagement.

After the circumferential angular displacement Δφ is added to Set II, the planetary carrier applies pre-tightening force to the planetary gear (D) 2.4 in the counterclockwise direction in the figure, and the pre-tightening force causes the backlash between the right tooth flank of the planetary gear (D) 2.4 and the right tooth flank of the sun gear and the backlash between the left tooth flank of the planetary gear (D) 2.4 and the left tooth flank of the internal gear of the internal gear housing to be eliminated.

The offset per unit Δφ can be obtained in two ways:

one way is to obtain an empirical value of the offset per unit Δφ to be 0.05°-0.5° by considering the radius of the distribution circle of the planetary gears, the number of the teeth and modulus of the planetary gears, and the rated torque.

The other way is using theoretical calculation, and the specific calculation process is as follows:

$$\Delta\varphi = \Delta\varphi_1 + \Delta\varphi_2 + \Delta\varphi_3$$

wherein, $\Delta\varphi_1$ is a circumferential angular displacement caused by backlash, and its specific calculation formula is as follows: 5

$$\Delta\varphi_1 = \frac{1}{2r_{distribution}}((W_{st}-W_{sr})/\cos\alpha_s + 2*(W_{pt}-W_{pr})/\cos\alpha_p + (W_{it}-W_{ir})/\cos\alpha_i)$$

in the formula, $r_{distribution}$ is a radius of a distribution circle of the planetary holes, $W_{st}$ is a non-backlash theoretical common normal of the sun gear, $W_{sr}$ is a measured common normal of the sun gear, and $\alpha_s$ is a pressure angle of a reference circle of the sun gear; $W_{pt}$ is a non-backlash theoretical common normal of the planetary gears, $W_{pr}$ is a measured common normal of the planetary gears, and $\alpha_p$ is a pressure angle of a reference circle of the planetary gears; and $W_{it}$ is a non-backlash theoretical common normal of an internal gear of the internal gear housing, $W_{ir}$ is a measured common normal of the internal gear of the internal gear housing, and $\alpha_i$ is a pressure angle of a reference circle of the internal gear of the internal gear housing.

The formula of calculating $\Delta\varphi_1$ is obtained by the following theories:

A. A non-backlash theoretical common normal length minus a measured common normal length is a normal backlash of a single gear, and then the normal backlash of the single gear is divided by the cos value of a gear pressure angle to obtain a circumferential backlash;

B. A sum of circumferential backlashes of two gears engaged is an engagement backlash;

C. Engagement backlashes between the sun gear and the planetary gears, and between the planetary gears and the internal gear are calculated respectively, an average of the two engagement backlashes is taken and is divided by the radius of the distribution circle of the planetary gears to obtain the circumferential displacement caused by the backlash.

$\Delta\varphi_2$ is the circumferential angular displacement caused by the bearing clearance, and the specific calculation formula of $\Delta\varphi_2$ is as follows:

$$\Delta\varphi_2 = \frac{e_{clearance}}{r_{distribution}}$$

wherein, $e_{clearance}$ is a bearing clearance, and the bearing is arranged between the planetary gear and the planetary gear shaft.

$\Delta\varphi_1$ and $\Delta\varphi_2$ ensure backlash elimination. In other words, under normal circumstances, there is contact between corresponding tooth flanks, but in order to ensure acceleration during the accompanying motion and continued contact after the tooth flanks wear out, the circumferential angular displacement $\Delta\varphi_3$ caused by a pre-tightening force between the contact tooth flanks must be provided. The specific calculation formula of $\Delta\varphi_3$ is as follows:

$$\Delta\varphi_3 = T * \frac{\eta}{kr_{distribution}},$$ in the formula, T is a rated torque, $\eta$ is a coefficient value taken according to possible wear conditions and manufacturing errors from a range of 0.1-0.2, and k is the whole stiffness of a system (the system is a closed force transmission system, and consists of planetary gears, a planetary carrier, sun gears, and an internal gear housing. Specifically, after the planetary carrier transfers a pre-tightening force F to the planetary gears, a distance change x will occur between two adjacent planetary gears, and the relationship therebetween can be approximately fitted to a linear relationship, namely k=F/x).

Meanwhile, the planetary carrier 4 applies a pre-tightening force to the planetary gear (A) 2.1 in the clockwise direction in the figure, and the pre-tightening force causes backlash between the left tooth flank of the planetary gear (A) 2.1 and the left tooth flank of the sun gear and the backlash between the right tooth flank of the planetary gear (A) 2.1 and the right tooth flank of the internal gear of the internal gear housing to be eliminated.

The planetary gear (A) 2.1 and the planetary gear (D) 2.4 respectively transfer forces applied by the planetary carrier to the sun gear 1 and the internal gear of the internal gear housing. The forces applied are equal in magnitude and opposite in direction, and are thus mutually counteracted.

The planetary gear (A) 2.1 and the planetary gear (D) 2.4 both have counter forces on the planetary carrier. The two forces are equal in magnitude and opposite in direction, and are thus mutually counteracted.

When the sun gear receives an input torque from the previous stage of structure (the planetary carrier can also be used as an input structure, and the speed of one of the sun gear and the input structure increases and the other decelerates) and starts to rotate (the sun gear is set to rotate clockwise), since backlash between the right tooth flank of the planetary gear (D) 2.4 and the right tooth flank of the sun gear and between the left tooth flank of the planetary gear (D) 2.4 and the left tooth flank of the internal gear of the internal gear housing are eliminated, the planetary gear (D) 2.4 is driven with no backlash when the sun gear rotates.

Meanwhile, since the backlash between the right tooth flank of the planetary gear (A) 2.1 and the right tooth flank of the sun gear and the backlash between the left tooth flank of the planetary gear (A) 2.1 and the left tooth flank of the internal gear of the internal gear housing are not eliminated, there exists backlash during transmission. However, due to presence of a pre-tightening force, there exist pre-tightening forces between the left tooth flank of the planetary gear (A) 2.1 and the left tooth flank of the sun gear and between the right tooth flank of the planetary gear (A) 2.1 and the right tooth flank of the internal gear of the internal gear housing, which will eliminate backlash at any time. Thus when the sun gear rotates, the planetary gear (A) 2.1 is also driven with no backlash.

The conditions of the planetary gear (B) 2.2 and the planetary gear (C) 2.3 are similar to the conditions of the planetary gear (A) 2.1 and the planetary gear (D) 2.4, and will not be discussed herein.

Meanwhile, since the planetary carrier transfers the pre-tightening force to the planetary gear set 2 through the planetary gear shaft and the bearing, the bearing is always in a pre-tightened state, thereby eliminating the bearing clearance.

**Integrated Coupling Design of Planetary Speed Reducer and Motor**

When full-closed-loop control is performed, it is also necessary to execute an integrated coupling design of the planetary speed reducer and the motor, specifically: the rotor 2 and the high-speed sun gear 3 in the first stage of planetary speed reduction mechanism are directly connected by insertion, and are fixed into one integrated body by interference fit. Meanwhile, the motor housing 16 and the internal gear housing 15 are directly connected by screws. This design not only further avoids drive errors resulting from assembly gaps occurring when adopting key connection, spline connection, or other connection modes but also ensures the precision of the full-closed- loop control while reducing the volume of the device.

In addition, the present invention can adopt such a mode that the motor housing 16 and the internal gear housing 15 are formed by integrated casting and then main cooperating parts are processed, which avoids processing and assembly errors resulting from separate processing and then assembly molding of the internal gear housing 15 and the motor housing 16 so as to further ensure drive precision of the speed reduction motor.

**Design of Double-Layered Self-Made Bearing at Output End of Planetary Speed Reducer**

An outer ring surface of the low-speed planetary carrier 14 and an inner ring surface of the rotary base form a first layer of bearing raceway 21, and an outer ring surface of the internal gear housing 15 and an inner ring surface of the rotary base form a second layer of bearing raceway 22. The first layer of bearing raceway 21 and the second layer of bearing raceway 22 are each clamped with a plurality of steel balls 23 in the circumferential direction.

Particularly, for illustrative purposes, 1, the shapes of the first layer of bearing raceway 21 and the second layer of bearing raceway 22 are both the same as the shape of a bearing raceway of an existing angular contact ball bearing. 2, in some occasions of high-speed rotation, retainers should be arranged between the first layer of bearing raceway of the bearing structure and the steel balls and between the second layer of bearing raceway and the steel balls, so that the service life of the whole bearing can be well ensured.

**Special Stepped Tooth Design of Sun Gear**

The outer surface of the sun gear in each stage of planetary speed reduction mechanism of the planetary speed reduction motor in this embodiment is designed as a stepped tooth (the stepped tooth consists of a high tooth portion and a low tooth portion) structure, which solves the existing problem on a large axial dimension of the speed reducer resulting from transmission of two adjacent stages of planetary gears and sun gears using couplings. The specific structure is as follows:

A high-tooth portion 17 of the high-speed sun gear 3 engages with the high-speed planetary gear set 4, the high-speed planetary gear set 4 engages with the internal gear housing 15, the high-speed planetary gear set 4 cooperates with the high-speed pin shaft 5 by bearings, the high-speed pin shaft 5 cooperates with the high-speed planetary carrier 6, and the high-speed planetary carrier 6 engages with a low tooth portion 18 of the middle-speed sun gear 7.

A high tooth portion 17 of the middle-speed sun gear 7 engages with the middle-speed planetary gear set 8, the middle-speed planetary gear set 8 engages with the internal gear housing 15, the middle-speed planetary gear set 8 cooperates with the middle-speed pin shaft 9 by bearings, the middle-speed pin shaft 9 cooperates with the middle-speed planetary carrier 10, and the middle-speed planetary carrier 10 engages with a low tooth portion 18 of the low-speed sun gear 11.

A high tooth portion of the low-speed sun gear 11 engages with the low-speed planetary gear set 12, the low-speed planetary gear set 12 engages with the internal gear housing 15, the low-speed planetary gear set 12 cooperates with the low-speed pin shaft 13 by bearings, and the low-speed pin shaft 13 cooperates with the low-speed planetary carrier 14, and the low-speed planetary carrier 14 outputs a torque to the outside through screws.

It should be noted that in the planetary speed reduction mechanism, the stepped tooth of the next stage of sun gear axially positions the previous stage of planetary speed reduction mechanism.

When the planetary speed reduction motor in this embodiment works, its basic working principle is as follows: rotor 2→high-speed sun gear 3→high-speed planetary gear set 4→high-speed planetary carrier 6→middle-speed sun gear 7→middle-speed planetary gear set 8→middle-speed planetary carrier 10→low-speed sun gear 11→low-speed planetary gear set 12→low-speed planetary carrier 14→external next stage of structured→drive shaft→grating encoder→rotor 2.

## Claims

1. A planetary speed reduction motor capable of achieving full-closed-loop control, comprising: a planetary speed reducer portion comprising an internal gear housing, S stages of planetary speed reduction mechanisms arranged in the internal gear housing, and a rotary base sleeving the exterior of the internal gear housing, wherein $S \geq 1$; and a motor portion comprising a motor housing, and a stator and a rotor arranged in the motor housing, **characterized by** further comprising:

   a full-closed-loop control device comprising a drive shaft, and a grating encoder positioned outside the motor housing and mounted on a tail end face of the motor housing, wherein,
   one end of the drive shaft is fixedly connected with a planetary carrier of the S-th stage of planetary speed reduction mechanism, and the other end of the drive shaft passes through each stage's sun gear in the S stages of planetary speed reduction mechanisms, the rotor and the motor housing in sequence and then is connected with a rotary portion of the grating encoder,
   the rotor and a sun gear of the first stage of planetary speed reduction mechanism in the planetary speed reducer are fixedly connected by interference fit; the front end of the motor housing and a speed reducer shell are directly fixed by screws; and
   in each stage of planetary speed reduction mechanism:
   at least two planetary holes in the planetary carrier have a circumferential offset relative to the position of planetary gears distributed in the circumferential direction in order to reduce reverse gap.

2. The planetary speed reduction motor capable of achieving full-closed-loop control according to claim 1, **characterized in that** planetary gears of a planetary gear set in each stage of planetary speed reduction mechanism are uniformly distributed in the circumferential direction, and at least two planetary holes in the planetary carrier have a circumferential offset relative to the position of the planetary gears uniformly distributed in the circumferential direction.

3. The planetary speed reduction motor capable of achieving full-closed-loop control according to claim 1 or 2, **characterized in that** when the offset has various numbers of planetary holes in the planetary carrier, there are following conditions of combinations of included angles of adjacent planetary holes in the circumferential direction:

   suppose that the number of the planetary holes is N, wherein $N \geq 2$, and an offset per unit is defined as $\Delta\varphi$,
   when N is an even number, a combination of an included angle between two adjacent planetary holes in the circumferential direction is $N/2$ {$(360/N)+\Delta\varphi$, $(360/N)-\Delta\varphi$}; and
   when N is an odd number, and $N=2M+1$ and $M \geq 1$, there are four conditions of combinations of included angles between two adjacent planetary holes in one planetary carrier in the circumferential direction:

A: M+1 (360/N)+$\Delta\varphi$, M-1 (360/N)-$\Delta\varphi$, 1 (360/N)-2$\Delta\varphi$;
B: M+1 (360/N)-$\Delta\varphi$, M-1 (360/N)+$\Delta\varphi$, 1 (360/N)+2$\Delta\varphi$;
C: M (360/N)+$\Delta\varphi$, M+1 (360/N)-(M/M+1)$\Delta\varphi$; and
D: M (360/N) -$\Delta\varphi$, M+1 (360/N) + (M/M+1)$\Delta\varphi$.

4. The planetary speed reduction motor capable of achieving full-closed-loop control according to claim 3, **characterized in that**, the $\Delta\varphi$ consists of a circumferential angular displacement caused by backlash, a circumferential angular displacement caused by bearing clearance, and a circumferential angular displacement caused by pre-tightening force between contact tooth flanks; and
the specific calculation formula of the $\Delta\varphi$ is: $\Delta\varphi = \Delta\varphi_1 + \Delta\varphi_2 + \Delta\varphi_3$, wherein:

$\Delta\varphi_1$ is a circumferential angular displacement caused by backlash;
$\Delta\varphi_2$ is a circumferential angular displacement caused by bearing clearance; and
$\Delta\varphi_3$ is a circumferential angular displacement caused by pre-tightening force between contact tooth flanks.

5. The planetary speed reduction motor capable of achieving full-closed-loop control according to claim 4, **characterized in that** the specific calculation formula of the $\Delta\varphi_1$ is:

$$\Delta\varphi_1 = \frac{1}{2r_{distribution}}((W_{st}-W_{sr})/\cos\alpha_s + 2*(W_{pt}-W_{pr})/\cos\alpha_p + (W_{it}-W_{ir})/\cos\alpha_i),$$

wherein, in the formula, $r_{distribution}$ is a radius of a distribution circle of the planetary holes, $W_{st}$ is a non-backlash theoretical common normal of the sun gear, $W_{sr}$ is a measured common normal of the sun gear, and $\alpha_s$ is a pressure angle of a reference circle of the sun gear; $W_{pt}$ is a non-backlash theoretical common normal of the planetary gears, $W_{pr}$ is a measured common normal of the planetary gears, and $\alpha_p$ is a pressure angle of a reference circle of the planetary gears; and $W_{it}$ is a non-backlash theoretical common normal of an internal gear of the internal gear housing, $W_{ir}$ is a measured common normal of the internal gear of the internal gear housing, and $\alpha_i$ is a pressure angle of a reference circle of the internal gear of the internal gear housing.

6. The planetary speed reduction motor capable of achieving full-closed-loop control according to claim 4, **characterized in that** the specific calculation formula of the $\Delta\varphi_2$ is:

$$\Delta\varphi_2 = \frac{e_{clearance}}{r_{distribution}},$$

wherein, $e_{clearance}$ is a bearing clearance, and the bearing is arranged between the planetary gears and a planetary gear shaft.

7. The planetary speed reduction motor capable of achieving full-closed-loop control according to claim 4, **characterized in that** the specific calculation formula of the $\Delta\varphi_3$ is:

$$\Delta\varphi_3 = T8*\frac{\eta}{kr_{distribution}},$$

wherein, in the formula, T is a rated torque, $\eta$ is a coefficient value taken according to possible wear conditions and manufacturing errors from a range of 0.1-0.2, and k is stiffness of the planetary speed reduction mechanism.

8. The planetary speed reduction motor capable of achieving full-closed-loop control according to claim 1-7, **characterized in that**,
a first layer of bearing raceway is formed between an outer ring surface of the planetary carrier in the S-th stage of planetary speed reduction mechanism and an inner ring surface of the internal gear housing;
a second layer of bearing raceway is formed between an outer ring surface of the internal gear housing and an inner ring surface of the rotary base; and
a plurality of steel balls are uniformly clamped in the first layer of bearing raceway in the circumferential direction, and a plurality of steel balls are uniformly clamped in the second layer of bearing raceway in the circumferential direction.

9. The planetary speed reduction motor capable of achieving full-closed-loop control according to claim 8, **characterized in that**, shapes of the first layer of bearing raceway and the second layer of bearing raceway are both the same as the shape of a bearing raceway of an angular contact ball bearing.

10. The planetary speed reduction motor capable of achieving full-closed-loop control according to claim 9, **characterized in that** a tooth portion of the sun gear is divided into a high tooth portion and a low tooth portion along the axis thereof, and the high tooth portion and the low tooth portion form a stepped tooth,
   wherein the high tooth portion and each of the planetary gears in a planetary gear set of the same stage of planetary speed reduction mechanism are engaged with each other, the low tooth portion and a planetary carrier in a previous stage of planetary speed reduction mechanism are engaged, and the stepped tooth axially positions the previous stage of planetary speed reduction mechanism.

11. A joint robot, comprising at least two joint limbs, **characterized in that**, the planetary speed reduction motor according to claim 1 is arranged between two articulated limbs.

Fig. 1

Fig. 2

Right tooth flank
of internal gear

Left tooth flank
of internal gear

Left tooth flank
of planetary gear

Right tooth flank
of planetary gear

Left tooth flank
of sun gear

Right tooth flank
of sun gear

Fig. 3

## INTERNATIONAL SEARCH REPORT

| | International application No. |
|---|---|
| | **PCT/CN2019/095837** |

| **A. CLASSIFICATION OF SUBJECT MATTER** |
|---|
| H02K 7/116(2006.01)i;  F16H 1/32(2006.01)i |
| According to International Patent Classification (IPC) or to both national classification and IPC |

| **B. FIELDS SEARCHED** |
|---|
| Minimum documentation searched (classification system followed by classification symbols) |
| H02K;; F16H |
| Documentation searched other than minimum documentation to the extent that such documents are included in the fields searched |
| Electronic data base consulted during the international search (name of data base and, where practicable, search terms used) |
| CNKI, CNPAT, WPI, EPODOC: 行星, 减速, 电机, 马达, 太阳轮, 行星架, 编码器, 闭环, 齿轮, 间隙, motor, planet+, decelerat +, sun, wheel, encoder, closed, loop, gear, clearance, gap |

| **C.** | **DOCUMENTS CONSIDERED TO BE RELEVANT** | |
|---|---|---|
| Category* | Citation of document, with indication, where appropriate, of the relevant passages | Relevant to claim No. |
| A | JP H09-177905 A (TEIJIN SEIKI CO., LTD.) 11 July 1997 (1997-07-11) description, paragraphs 0001-0027, and figures 1 and 2 | 1-11 |
| A | CN 107110334 A (GUNTHER, Z. ET AL.) 29 August 2017 (2017-08-29) entire document | 1-11 |
| A | CN 107575541 A (CHONGQING QINGPING MACHINERY CO., LTD.) 12 January 2018 (2018-01-12) entire document | 1-11 |
| A | CN 204597715 U (SUZHOU MA BU QI PREC MOTOR CO., LTD.) 26 August 2015 (2015-08-26) entire document | 1-11 |
| A | CN 207410204 U (GUANGZHOU RUIBAO ELECTRICAL CO., LTD.) 25 May 2018 (2018-05-25) entire document | 1-11 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 September 2019** | **14 October 2019** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/095837**

| Patent document cited in search report | | | Publication date (day/month/year) | Patent family member(s) | | | Publication date (day/month/year) |
|---|---|---|---|---|---|---|---|
| JP | 特开平9-177905 | A | 11 July 1997 | None | | | |
| CN | 107110334 | A | 29 August 2017 | EP | 3152467 | A2 | 12 April 2017 |
| | | | | WO | 2015188803 | A2 | 17 December 2015 |
| | | | | WO | 2015188803 | A3 | 26 May 2016 |
| | | | | DE | 102014008143 | A1 | 17 December 2015 |
| CN | 107575541 | A | 12 January 2018 | CN | 107575541 | B | 30 April 2019 |
| | | | | CN | 207111848 | U | 16 March 2018 |
| CN | 204597715 | U | 26 August 2015 | None | | | |
| CN | 207410204 | U | 25 May 2018 | None | | | |

Form PCT/ISA/210 (patent family annex) (January 2015)